# EUROPEAN PATENT SPECIFICATION

(11) **EP 4 099 435 B1**
(45) Date of publication and mention of the grant of the patent: **21.10.2026**
(21) Application number: 20916563.8
(22) Date of filing: 17.12.2020
(51) Int. Cl.: H01M 4/136, H01M 4/36, H01M 4/38, H01M 4/58, H01M 4/134, H01M 4/02

(54) **NEGATIVE ELECTRODE ACTIVE MATERIAL FOR SECONDARY BATTERIES, AND SECONDARY BATTERY**
NEGATIVELEKTRODENAKTIVMATERIAL FÜR EINE SEKUNDÄRBATTERIE UND SEKUNDÄRBATTERIE
MATÉRIAU ACTIF D'ÉLECTRODE NÉGATIVE POUR BATTERIES SECONDAIRES, ET BATTERIE SECONDAIRE

(30) Priority: 31.01.2020 JP 2020015898
(43) Date of publication of application: 07.12.2022
(73) Proprietor: Panasonic Intellectual Property Management Co., Ltd., Osaka-shi, Osaka 540-6207 (JP)
(72) Inventor: SAITO, Yusuke, Osaka-shi, Osaka 540-6207 (JP); KAMIDAIRA, Toshiki, Osaka-shi, Osaka 540-6207 (JP); SEKI, Naoki, Osaka-shi, Osaka 540-6207 (JP); SATO, Yosuke, Osaka-shi, Osaka 540-6207 (JP)
(74) Representative: Novagraaf International SA
(86) International application number: PCT/JP2020/047197
(87) International publication number: WO 2021/153078

(56) References cited:
- WO-A1-2019/087771
- WO-A1-2019/130787
- WO-A1-2019/151016
- CN-A- 110 125 429
- JP-A- 2015 176 674

## Description

### [Technical Field]

The present disclosure primarily relates to an improvement in a negative electrode active material for secondary batteries.

### [Background Art]

Recently, secondary batteries such as nonaqueous electrolyte secondary batteries are expected as a power source for small consumer applications, power storage devices, and electric vehicles, because of their high voltage and high energy density. With a demand for high energy density in batteries, as a negative electrode active material having a high theoretical capacity density, use of a material containing silicon capable of being alloyed with lithium is expected.

However, since the material containing silicon has a large irreversible capacity, there is a problem in that the initial charge/discharge efficiency (in particular, the ratio of the initial discharge capacity to the initial charge capacity) is low. Therefore, various techniques have been proposed in which lithium corresponding to the irreversible capacity is introduced into a material containing silicon in advance. Specifically, it has been proposed to use a composite particle containing a lithium silicate phase and silicon particles dispersed in the lithium silicate phase (Patent Literature 1 and 2). Silicon particles contribute to the charge-discharge response (reversible lithium storage and release).

The composite particles are produced by sintering a mixture of, for example, a glassy lithium silicate powder and silicon particles at a high temperature and high pressure atmosphere.

### [Citation List]

### [Patent Literature]

Patent Literature 1: Japanese Laid-Open Patent Publication No. 2015-153520
Patent Literature 2: WO 2019/130787 A1

### [Summary of Invention]

It is known that the above composite particles have a large degree of expansion and contraction of silicon particles accompanied by storage and release of lithium during charging and discharging. As a result, expansions and contractions of the silicon particles cause the lithium silicate phase existing around the silicon particles to be highly stressed, thereby induce cracking or splitting of the composite particles. Along with this, the bonding force between the composite particles and the binder around is weakened, and the cracked composite particle may be isolated by losing the conductive path with the periphery particles. Further, side reactions between the electrolyte solution and silicon particles are promoted. As a result, the charge/discharge cycle characteristics are lowered. In particular, the larger the crystallite size of the silicon particles, the larger the expansion/contraction, and the lower the charge/discharge cycle characteristics when used as a negative electrode active material.

In view of the above, an aspect of the present disclosure relates to a negative electrode active material for a secondary according to appended claim 1.

Another aspect of the present disclosure relates to a secondary battery including a positive electrode, a negative electrode, an electrolyte, and a separator interposed between the positive electrode and the negative electrode, wherein the negative electrode includes a current collector and a negative electrode active material layer, and the negative electrode active material layer includes the negative electrode active material for the secondary battery described above.

In the negative electrode active material where the silicon particles are dispersed in the silicate phase, the crystallite size of the silicon particles can be reduced. Therefore, by using the negative electrode active material for a secondary battery and the secondary battery of the present disclosure, a negative electrode having excellent charge/discharge cycle characteristics can be produced.

### [Brief Description of Drawings]

[FIG. 1]

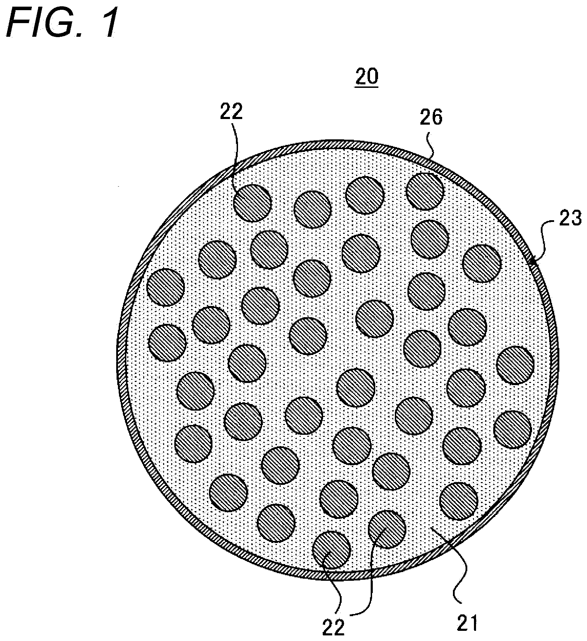

   FIG. 1 is a cross sectional view schematically showing a negative electrode active material (LSX particles) for a secondary battery according to an embodiment of the present disclosure.
[FIG. 2]

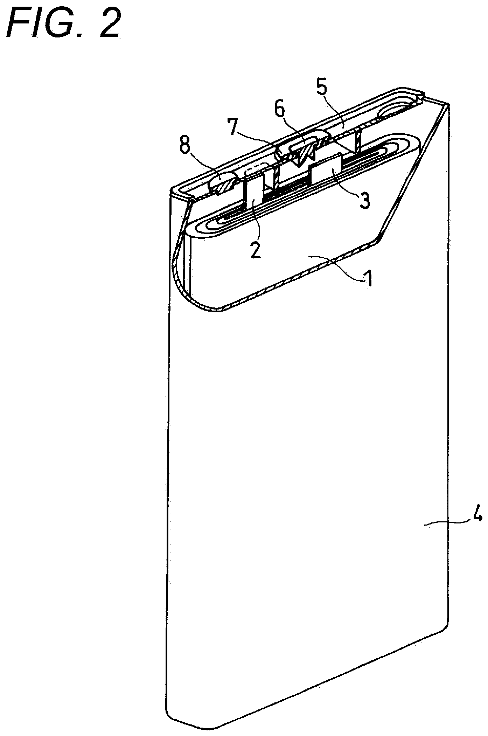

   FIG. 2 is a schematic partially cutaway oblique view of a secondary battery in an embodiment of the present disclosure.

### [Description of Embodiments]

A negative electrode active material for a secondary battery of the embodiment of the present disclosure includes silicate composite particles including silicon particles and a silicate phase. In the silicate composite particles, the silicon particles are dispersed within the silicate phase. The silicon particles contain a first element of at least one selected from the group consisting of germanium and aluminum.

The silicate composite particles have a sea-island structure in which the silicon particles as island-portions are dispersed in the silicate phase as a sea-portion. Since the capacity can be increased by controlling the amount of the silicon particles dispersed in the silicate phase, and the silicon particles are dispersed in the silicate phase, the stress accompanying expansion and contraction of the silicon particles during charging and discharging is alleviated by the silicate phase, and expansion and contraction of the LSX particles can be reduced. Therefore, cracking and splitting of the silicate composite particles can be reduced, enabling both a higher capacity and improved cycle characteristics in batteries to be easily achieved.

Conventionally, composite particles have been produced by mixing a silicate powder and silicon particles, forming a composite by grinding the mixture with a ball mill or the like, and sintering the mixture after grinding in a high temperature and high pressure atmosphere. However, in this case, by the sintering under heat, the crystallite size of the silicon particles is increased. As a result, it becomes susceptible to deterioration caused by expansion and contraction of the silicon particles, and high charge/discharge cycle characteristics are unlikely to be maintained in some cases. Meanwhile, if the sintering under heat is insufficient, the sintered product may have a high porosity, and the porosity inside the silicate composite particles tends to be high. Consequently, the surface area reacting with the electrolyte solution increases, and side reaction tends to increase. As a result, it may be difficult to maintain high charge/discharge cycle characteristics.

Therefore, in the negative electrode active material for a secondary battery of this embodiment, the silicon particles include a first element. The first element is an element which can be dissolved in silicon to form a solid solution. For example, germanium and/or aluminum having an atomic radius close to that of silicon can be preferably used. At least a portion of the first element may be present in the silicon particles in a state where a solid solution is formed with silicon. In this manner, the crystalline growth of the silicon particles at the sintering under heat can be retarded. As a result, the crystallite size of the silicon particles can be reduced, and higher cycle characteristics can be maintained.

Further, by containing the first element, the melting point of the silicon particles is lowered, and wettability at an interface of the lithium silicate phase and the silicon particles improves at the time of sintering under heat. As a result, it is considered that the lithium silicate phase adheres to the silicon particles, the porosity of the LSX particles can be reduced, and even better cycle characteristics can be realized.

Here, the porosity (%) of the LSX particles means the ratio of the area occupied by the voids to the total area of the mother particles in cross sections of the particles, and can be determined by SEM-observation of the particle cross sections. A specific measuring method of the porosity is as follows.
(1) The cross sections of the mother particles are exposed using an ion milling device (ex. IM4000) manufactured by Hitachi High-Tech Corporation.
(2) The exposed particle cross sections are observed by SEM, the ratio of area of the voids to the total area of particle cross sections is measured, and the porosity ((area of the voids)×100/(total area of particle cross sections)) is calculated. The porosity is the average for 10 particles.

For the sintered product before grinding, the porosity may be determined by a mercury injection method.

The first element may be present partly in the form of a solid solution with silicon in the silicon particles, and the rest may be partly deposited in the silicon particles. In other words, the content ratio of the first element contained in the silicon particles may be the soluble limit or less with silicon, or exceed the soluble limit with silicon. For example, when the first element is germanium and/or aluminum, the germanium and/or aluminum deposited in the silicon particles may have a function of relieving expansion and contraction of silicon associated with charging and discharging because their modulus of elasticity is smaller than silicon and they are easily compressed.

The first element may be included in the silicon particles at a ratio of 0.1 atom % or more and 20 atom% or less, 0.1 atom% or more and 10 atom% or less, or 1 atom% or more and 20 atom% or less. The first element content is determined by inductively coupled plasma-atomic emission spectroscopy (ICP-AES) on the silicate composite particles taken out of the battery by the method described later. The first element content of the silicon particles can be determined by Energy Dispersive X-ray Spectroscopy on cross sections of the silicate composite particles by Transmission Electron Microscope.

The silicate phase may be a lithium silicate phase. In this case, the silicate composite particles are composite particles (hereinafter, also referred to as LSX particles) in which silicon particles are dispersed in a lithium silicate phase. Alternatively, the silicate phase is a silicate of an alkali metal other than Li (e.g., sodium silicate). In the LSX particles, the lithium silicate phase includes an oxide phase represented by, for example, formula: Li_{2z}SiO_{2+z} (0 < z < 1). In view of stability, ease of manufacture, lithium ion conductivity, etc., z = 1/2 is preferable.

The lithium silicate phase may contain elements other than Li, Si, and O (oxygen). The lithium silicate phase may contain, for example, at least one selected from the group consisting of alkali metal elements (except Li) and Group II elements.

Inclusion of an alkali metal element other than Li in the lithium silicate phase makes it difficult to crystallize, lowers viscosity in the softened state, and increases flowability. Therefore, even in the heat treatment at a low temperature, the gaps between silicon particles are easily filled, and dense composite particles are easily generated. The alkali metal element may be Na and/or K because it is inexpensive. The atomic ratio X/Li of the alkaline element X (e.g., K) other than Li contained in the lithium silicate phase to Li may be, for example, 0.1 to 7.1, 0.4 or more and 5 or less, or 0.7 or more and 2 or less.

The lithium silicate phase may include a Group II element. Generally, the silicate phase exhibits alkaline properties, but Group II elements works to suppress elution of alkali metals from the silicate phase. Therefore, when a slurry containing a negative electrode active material is prepared, the slurry viscosity tends to be stabilized. Therefore, the need for a process (e.g., acid treatment) for neutralizing the alkali component of the LSX particles is also reduced.

As the Group II element, at least one selected from the group consisting of Be, Mg, Ca, Sr, Ba, and Ra can be used. Among these, Ca is preferable in that Ca can improve Vickers hardness of the lithium silicate phase and further improve cycle characteristics. The content of the Group II element is, for example, 20 mol% or less, may be 15 mol% or less, or may be 10 mol% or less, relative to the total amount of elements other than O contained in the lithium silicate phase.

The lithium silicate phase may contain an element M other than the alkali metal element and the Group II element. The element M is at least one selected from the group consisting of B, Al, Zr, Nb, Ta, La, V, Y, Ti, P, Bi, Zn, Sn, Pb, Sb, Co, Er, F, and W. In particular, for example, B has a low melting point and is beneficial for improving flowability in sintering. Although Ca reduces ion conductivity, it has an action of increasing the hardness of the lithium silicate phase. Al, Zr, Nb, Ta, and La may improve hardness while retaining ion conductivity. The content of the element M is, for example, 10 mol% or less relative to the total amount of elements other than O contained in the lithium silicate phase, or may be 5 mol% or less.

The content of B, Na, K, and Al contained in the lithium silicate phase is determined by quantitative analysis according to JIS R3105 (1995) (Methods for chemical analysis of borosilicate glasses), whereas the Ca content is determined by quantitative analysis according to JIS R3101 (1995) (Methods for chemical analysis of Soda-Lime-Magnesia-Silica glasses).

The remaining elements contained are determined by the method below. First, a sample of the lithium silicate phase or LSX particles containing the same is completely dissolved in a heated acid solution (mixed acid of hydrofluoric acid, nitric acid, and sulfuric acid), and the carbon of the solution residue is filtered and removed. Afterwards, the resulting filtrate is analyzed by inductively coupled plasma-atomic emission spectrometry (ICP-AES) to determine the spectral intensities of the respective elements. Subsequently, a calibration curve is prepared using standard solutions of commercially available elements, and the content of each element contained in the lithium silicate phase is calculated.

The silicate phase and silicon particles are present in the silicate composite particles, and these can be distinguished and quantified by using a Si-NMR. The Si content obtained by ICP-AES, such as the one described above, is the sum of the amount of Si constituting the silicon particles and the amount of Si in the silicate phase. On the other hand, the amount of Si constituting the silicon particles can be separately quantified using a Si-NMR. Therefore, the amount of Si in the silicate phase can be quantified by subtracting the amount of Si constituting the silicon particles from the Si content obtained by ICP-AES. A mixture containing a silicate phase with a known Si content and silicon particles at a predetermined ratio may be used for the standard substance required for quantitation.

Preferable Si-NMR measurement conditions are shown below.

### <Si-NMR Measurement conditions>

Measuring equipment: Solid-state nuclear magnetic resonance spectrometer (INOVA 400) manufactured by Varian Medical Systems
Probe: Varian 7 mm CPMAS-2
MAS: 4.2 kHz
MAS speed: 4 kHz
Pulse: DD (45° pulse + signal uptake time 1H decoupled)
Repetition time: 1200 sec to 3000sec
Observation width: 100 kHz
Observation center: near -100 ppm
Signal uptake time: 0.05 sec
Total number of times: 560
Sample volume: 207.6 mg

In order to increase the capacity and improve cycle characteristics, the content of the silicon particles in the silicate composite particles may be, for example, 30 mass% or more, and 80 mass% or less. By setting the content of the silicon particles to 30 mass% or more, the ratio of the silicate phase is reduced, and the initial charge/discharge efficiency is easily improved. By setting the content of the silicon particles to 80 mass% or less, the degree of expansion and contraction of the LSX particles during charging and discharging can be easily reduced. The silicon particle content in the silicate composite particles is preferably 40 mass% or more, more preferably 50 mass% or more.

The silicon particles dispersed in the silicate phase have a particulate phase of elemental silicon (Si) and are composed of a single or a plurality of crystallites. Preferably, the crystallite size of the silicon particles is 30 nm or less. When the crystallite size of the silicon particles is 30 nm or less, the volume change due to expansion and contraction of the silicon particles due to charging and discharging can be reduced, and cycle characteristics can be further enhanced. In particular, the isolation of the silicon particles is suppressed, and decrease in charge/discharge efficiencies due to the isolation of the particles is suppressed: the isolation due to voids formed around the silicon particles from contraction of the silicon particles, resulting in reduced contact points with the periphery of the particles. The lower limit of the crystallite size of the silicon particles is not particularly limited, but is, for example, 5 nm.

The crystallite size of the silicon particles is more preferably 2 nm or more and 30 nm or less, and more preferably 2 nm or more and 20 nm or less. When the crystallite size of silicon particles is 20 nm or less, the expansion and contraction of the silicon particles can be made uniform, and cycle characteristics can be improved by reducing the fine cracks of the particles due to the expansion and contraction of the silicon particles during charge and discharge. The crystallite size of the silicon particles is calculated by the Sheller's equation from the half-width of the diffraction peak assigned to the Si (111) plane of the X-ray diffraction (XRD) pattern of the silicon particles.

At least a portion of the surface of the silicate composite particles may be coated with a conductive material. Since the silicate phase has poor electronic conductivity, the conductivity of the composite particles tends to be low. However, by coating the surface of the mother particles with a conductive material to form a conductive layer, electrical conductivity of the LSX particles can be dramatically increased. The carbon material is a preferable conductive material. Preferably, the carbon material includes at least one selected from the group consisting of a carbon compound and a carbonaceous substance.

Preferably, the thickness of the conductive layer should be substantially thin enough not to affect the average particle size of the silicate composite particles. The thickness of the conductive layer is preferably 1 to 200 nm, and more preferably 5 to 100 nm considering securement of conductivity and diffusivity of ions (e.g., lithium ion) contributing to charging and discharging. The thickness of the conductive layer can be measured by cross sectional observation of the silicate composite particles using SEM or TEM (transmission electron microscope).

Examples of the carbon compound include a compound containing, for example, carbon and hydrogen, and a compound containing carbon, hydrogen, and oxygen. As the carbonaceous substance, amorphous carbon having low crystallinity, graphite having high crystallinity, or the like can be used. Examples of the amorphous carbon include carbon black, coal, coke, charcoal, and activated carbon. Examples of the graphite include natural graphite, artificial graphite, graphitized mesophase carbon particles, and the like. Among them, amorphous carbons are preferable because of their low hardness and their large buffering effects on silicon particles, which change volume by charging and discharging. The amorphous carbon may be soft carbon or hard carbon. Examples of the carbon black include acetylene black and Ketjen black.

The silicate composite particles can be removed from the battery by the following technique. First, the battery is disassembled to take out the negative electrode, and the negative electrode is washed with anhydrous ethyl methyl carbonate or dimethyl carbonate to remove the electrolyte solution. Next, the negative electrode mixture is peeled off from the copper foil and ground in a mortar to obtain a sample powder. Next, the sample powder is dried in a dry atmosphere for 1 hour and immersed in a weakly boiled 6M hydrochloric acid for 10 minutes to remove alkali metals such as Na and Li which can be contained in a binder or the like. Next, the sample powder is washed with ion-exchanged water, filtered off, and dried at 200°C for 1 hour. Afterwards, in an oxygen atmosphere, only the LSX particles can be isolated by heating to 900°C to remove the carbon components.

The cross section of the silicate composite particles can be observed by, for example, the following method. First, the battery is disassembled, and the negative electrode is taken out. A cross section polisher (CP) is used to obtain a cross section of the negative electrode mixture layer. A scanning electron microscopy (SEM) is used to observe the cross section of the negative electrode mixture layer. From the cross sectional image of the reflected electron image of the negative electrode mixture layer, 10 LSX particles having the largest diameter of 5 µm or more are randomly selected, and the respective LSX particles are analyzed by element mapping (e.g., carbon) by energy-dispersive X-ray (EDX). The area where the target element is contained is calculated using an image analysis software. The observation magnification is desirably 2000 to 20000. The area where the predetermined element is contained is measured from 10 particles, and the measured values are averaged.

In the course of charge/discharge, a coating is formed on the surfaces of the silicate composite particles by decomposition of electrolytes or the like. As described later, the silicate composite particles may further include a conductive layer covering the surface of the composite particles. Therefore, mapping analysis by EDX is performed for the range inner from the peripheral edge of the cross section of the silicate composite particles by 1 µm, so that the measuring range does not include a thin coating or the conductive layer. The state of the distribution of the carbon material in the silicate composite particles can also be confirmed by the mapping analysis by EDX. Preferably, samples prior to or early in the cycle are subjected to measurements because it is difficult to distinguish from decomposed products of electrolytes at the terminal period of the cycle.

Preferable cross sectional SEM-EDX analysis conditions are shown below.

### <SEM-EDX Measurement conditions>

Processing Equipment: manufactured by JEOL, SM-09010(Cross Section Polisher)
Processing conditions: Acceleration voltage 6kV
Current value: 140 µA
Vacuum degree: 1 × 10⁻³ to 2 × 10⁻³ Pa
Measuring device: electron microscopy manufactured by HITACHI, SU-70
Acceleration voltage at analysis: 10 kV
Field: Free mode
Probe Current Mode: Medium
Probe Current Range: High
Anode Ap.: 3
OBJ Ap.: 2
Analysis area: 1 µm square
Analysis Software: EDAX Genesis
CPS: 20500
Lsec: 50
Time constant: 3.2

Furthermore, in addition to SEM-EDX spectroscopy, Auger electron spectroscopy (AES), laser ablation ICP mass spectroscopy (LA-ICP-MS), X-ray photoelectron spectroscopy (XPS), and the like can be used to quantify the elements in the silicate composite particles contained in the negative electrode active material layer in discharged state.

Next, a method for producing silicate composite particles will be described in detail by exemplifying the production of LSX particles having a lithium silicate phase.

### Step (i)

As a raw material of lithium silicate, a raw material mixture containing a raw material containing Si, and a Li raw material at a predetermined ratio is used. The raw material mixture may contain an alkali metal element, a Group II element, and/or an element M described above. A mixture obtained by mixing a predetermined amount of the above raw materials is dissolved, and the melt is flaked through a metal roll to prepare a lithium silicate. Thereafter, the flaked silicate is crystallized by heat treatment at a temperature of a glass transition point or more, and the melting point or less in an air atmosphere. The flaked silicate can also be used without crystallization. The silicates can also be produced by solid phase reaction, by baking at a temperature of the melting point or less without dissolving the mixture mixed in a predetermined amount.

For the Si raw material, silicon oxide can be used. As the Li raw material, for example, lithium carbonate, lithium oxide, lithium hydroxide, lithium hydride, or the like can be used. These may be used singly, or two or more kinds may be used in combination. Examples of the raw material of the alkali metal element, the Group II element, and the element M include an oxide, a hydroxide, a carbonic acid compound, a hydride, a nitrate, and a sulfate of each element.

In the lithium silicate, the Si raw material which has not reacted with the Li raw material may remain. The remaining Si raw material is dispersed in the lithium silicate as a silicon oxide phase.

### Step (ii)

Next, the raw material silicon is blended into the lithium silicate to make a composite. As the raw material silicon, a material containing a predetermined amount of the first element is used. For example, composite particles are produced through steps (a) to (c) below.

### Step (a)

First, a powder of raw material silicon and a powder of lithium silicate are mixed at a mass ratio of, for example, 20:80 to 95:5. As the raw material silicon, coarse particles of silicon having an average particle size of about several µm to several tens of µm may be used. As the coarse particles, a material containing a predetermined amount of the first element is used.

### Step (b)

Next, using a grinding apparatus such as a ball mill, a mixture of raw material silicon and lithium silicate is ground while forming microparticles to make a composite. At this time, an organic solvent may be added to the mixture for wet-grinding. A predetermined amount of an organic solvent may be charged into the grinding vessel at a time at an initial stage of grinding, or a predetermined amount of an organic solvent may be intermittently charged into the grinding vessel dividedly a plurality of times in the grinding process. The organic solvent serves to prevent the object to be ground from adhering to the inner wall of the grinding vessel.

As the organic solvent, an alcohol, ether, fatty acid, alkane, cycloalkane, silicate ester, metal alkoxide, or the like can be used.

Each of the raw material silicon and lithium silicate may be separately converted into fine particles and then mixed. Also, silicon nanoparticles, and noncrystalline lithium silicate nanoparticles may be prepared and mixed without using a grinding apparatus. For producing the nanoparticles, a known method such as a gas phase method (e.g., a plasma method) or a liquid phase method (e.g., a liquid phase reduction method) may be used.

### Step (c)

The mixture is then pressed and heated to 450°C to 1000°C, for example, in an inert gas atmosphere (e.g., an atmosphere of argon or nitrogen) and sintered. For the sintering, a sintering device that can perform pressing in an inert atmosphere, such as a hot press, a discharge plasma sintering, or the like may be used. Upon sintering, silicate softens and flows to fill the gaps between the silicon particles. As a result, a dense, block sintered product with the silicate phase as a sea-portion and the silicon particles as island-portions can be produced.

The resulting sintered product is ground to give silicate composite particles. By appropriately selecting grinding conditions, silicate composite particles with a predetermined average particle size can be produced. The average particle size of the silicate composite particles is, for example, 1 to 20 µm. The average particle size of the silicate composite particles means the particle size (volume average particle size) at which the volume integrated value is 50% in volume particle size distribution measured by laser diffraction scattering method.

Sintering may be carried out by rolling the powder of the mixture which has been molded into a sheet in advance under heat. Rolling is usually carried out by passing a sheet of the mixture through the gap between two rotating rolls. Heating and pressing of the mixture can be performed simultaneously by passing the sheet of the mixture through a gap of heated rolls. The sheet of the mixture may be heated prior to and/or after passing through rolls. By performing heat treatment while rolling the mixture molded into a sheet, a negative electrode active material for a secondary battery (LSX particles) can be produced at a higher productivity.

### Step (iii)

At least a portion of the surface of the composite particles may then be coated with a conductive material to form a conductive layer. The conductive material is preferably electrochemically stable, and a conductive carbon material is preferable. As a manner of coating the surface of the composite particles with a conductive carbon material, a CVD method using a hydrocarbon gas such as acetylene or methane as a raw material, a method in which a coal pitch, a petroleum pitch, a phenol resin, or the like is mixed with composite particles and heated and carbonized can be exemplified. Further, carbon black may be adhered to the surface of the composite particles. The coating of the conductive carbon material can be performed by heating a mixture of the conductive carbon material and the composite particle from which the fine particles have been removed, for example, in an inert atmosphere (for example, an atmosphere of argon, nitrogen, or the like) at 700°C to 950°C.

### Step (iv)

A step of washing the composite particles (including those having a conductive layer on the surface), with an acid may be performed. For example, by washing the composite particles with an acidic aqueous solution, a trace amount of an alkali component present on the surface of the composite particles, which may be formed when the raw material silicon and the lithium silicate are made into a composite, can be dissolved and removed. As the acidic aqueous solution, an aqueous solution of an inorganic acid such as hydrochloric acid, hydrofluoric acid, sulfuric acid, nitric acid, phosphoric acid, or carbonic acid, or an aqueous solution of an organic acid such as citric acid or acetic acid can be used.

In Step (ii)(c) and Step (iii), the heating is performed at a relatively high temperature, and therefore the crystallite size of the silicon particles in the silicate composite particles may increase along with the heating. However, by including the first element in the silicon particles, the increase in the crystallite sizes of the silicon particles can be suppressed.

FIG. 1 schematically shows a cross section of a LSX particle 20 as an example of the negative electrode material.

A mother particle 23 includes a lithium silicate phase 21; and silicon particles 22 dispersed within the lithium silicate phase 21. The mother particle 23 has a sea-island structure in which fine silicon particles are dispersed in a matrix of the lithium silicate phase 21. The surface of the mother particle 23 is coated with a conductive layer 26 to form a LSX particle 20.

The silicon particles 22 contain a first element other than silicon. The SiO₂ content in the mother particle 23 measured by a Si-NMR is preferably, for example, 30 mass% or less, and more preferably less than 7 mass%.

The mother particle 23 may include components other than the lithium silicate phase 21, silicon particles 22, silicon oxide phase, and carbon materials. In view of improving strength of the mother particle 23, a reinforcing material such as oxide including ZrO₂, or carbide, may be included in the mother particle 23 up to less than 10 wt% relative to the mother particle 23.

The average particle size of the silicon particles 22 is 1 nm or more and 1000 nm or less prior to initial charging, and it can be 500 nm or less, 200 nm or less, or 50 nm or less. Such suitable micronizing of the silicon particles 22 reduces the change in volume during charging and discharging, thereby improving structural stability. In addition, the expansion and contraction of the silicon particles are made uniform, and cycle characteristics are improved by suppressing the cracking of the particles. The average particle size of the silicon particles 22 is measured by observing cross sections of the negative electrode material using SEM or TEM. Specifically, the maximum diameters of arbitrarily selected 100 silicon particles 22 are averaged.

The secondary battery according to the embodiment of the present disclosure includes a positive electrode, a negative electrode, an electrolyte, and a separator interposed between the positive electrode and the negative electrode. The negative electrode includes a current collector and a negative electrode active material layer including the negative electrode active material for a secondary battery described above. In the following, the negative electrode, positive electrode, electrolyte, and separator included in the secondary battery according to the embodiment of the present disclosure will be described.

### [Negative Electrode]

The negative electrode includes a negative electrode current collector and a negative electrode mixture layer formed on the negative electrode current collector surface and having a negative electrode active material. The negative electrode active material layer can be formed, for example, by applying a negative electrode slurry in which a negative electrode mixture is dispersed in a dispersion medium, on a surface of the negative electrode current collector, and drying the slurry. The dried coating film may be rolled, if necessary. The negative electrode mixture layer may be formed on one surface of the negative electrode current collector, or on both surfaces thereof.

The negative electrode mixture contains, as a negative electrode active material, a negative electrode active material for a secondary battery containing the LSX particles described above as an essential component, and as an optional component, a binder, a conductive agent, a thickener, and the like can be included. The silicon particles in the LSX particles can absorb many lithium ions, and therefore contribute to increase in the capacity of the negative electrode.

The negative electrode active material may further include other active material that electrochemically stores and releases lithium ions. As another active material, for example, a carbon-based active material is preferable. Since the volume of the LSX particles expands and contracts with charging and discharging, when the ratio thereof in the negative electrode active material increases, contact failure between the negative electrode active material and the negative electrode current collector tends to occur with charging and discharging. On the other hand, when the LSX particles and a carbon-based active material are used in combination, excellent cycle characteristics can be achieved while a high capacity of silicon particles is given to the negative electrode. The ratio of the LSX particles to the sum of LSX particles and carbon-based active material is, for example, preferably 0.5 to 15 mass%, and more preferably 1 to 5 mass%. This allows achievement in both higher capacity and improved cycle characteristics easily.

Examples of the carbon-based active material include graphite, soft carbon, hard carbon, and the like. Preferred among them is graphite, which is excellent in stability during charging and discharging and has small irreversible capacity. Graphite means a material having a graphite type crystal structure, and includes, for example, natural graphite, artificial graphite, graphitized mesophase carbon particles, and the like. A kind of carbon-based active material may be used singly, or two or more kinds may be used in combination.

As the negative electrode current collector, a non-porous conductive substrate (metal foil, etc.), a porous conductive substrate (mesh-body, net-body, punched sheet, etc.) is used. As the material of the negative electrode current collector, stainless steel, nickel, nickel alloy, copper, copper alloy, and the like can be exemplified. The thickness of the negative electrode current collector is not particularly limited, but in view of balance between strength and weight reduction of the negative electrode, 1 to 50 µm is preferable, and 5 to 20 µm is more preferable.

Examples of the binder include fluororesin, polyolefin resin, polyamide resin, polyimide resin, vinyl resin, styrene-butadiene copolymer rubber (SBR), polyacrylic acid, and derivatives thereof. These may be used singly or in combination of two or more. Examples of the conductive agent include carbon black, conductive fibers, fluorinated carbon, and organic conductive materials. These may be used singly or in combination of two or more. Examples of the thickeners include carboxymethyl cellulose (CMC) and polyvinyl alcohol. These may be used singly or in combination of two or more.

Examples of the dispersion medium include water, alcohol, ether, N-methyl-2-pyrrolidone (NMP), or a mixture solvent thereof.

### [Positive Electrode]

The positive electrode includes, for example, a positive electrode current collector, and a positive electrode mixture layer formed on the surface of the positive electrode current collector. The positive electrode mixture layer can be formed, for example, by applying a positive electrode slurry in which a positive electrode mixture is dispersed in a dispersion medium, on a surface of the positive electrode current collector, and drying the slurry. The dried coating film may be rolled, if necessary. The positive electrode mixture layer may be formed on one surface of the positive electrode current collector, or may be formed on both surfaces thereof.

The positive electrode mixture contains a positive electrode active material as an essential component, and may contain a binder, a conductive agent, and the like as an optional component.

As the positive electrode active material, a lithium composite metal oxide can be used. Examples of the lithium composite metal oxide include LiₐCoO₂, LiₐNiO₃, LiₐMnO₂, LiₐCo_{b}Ni_{1-b}O₂, LiₐCo_{b}Mi_{-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one element selected from the group consisting of Mn, Fe, Co, and Ni). Here, 0 ≤ a ≤ 1.2, 0 ≤ b ≤ 0.9, and 2.0 ≤ c ≤ 2.3. The value "a" indicating the molar ratio of lithium is a value immediately after the active material is produced, and is increased or decreased by charge/discharge.

As the binder and the conductive agent, those exemplified for the negative electrode can be used. As the conductive agent, graphite such as natural graphite or artificial graphite may be used.

The shape and thickness of the positive electrode current collector can be selected from the shapes and ranges according to the negative electrode current collector. Examples of the material of the positive electrode current collector may be, for example, stainless steel, aluminum, aluminum alloy, titanium, or the like.

### [Electrolyte]

The electrolyte includes a solvent and a lithium salt dissolved in the solvent. The concentration of the lithium salt in the electrolyte is, for example, 0.5 to 2 mol/L. The electrolyte may contain a known additive.

As the solvent, an aqueous solvent or a nonaqueous solvent is used. As the nonaqueous solvent, for example, cyclic carbonate, chain carbonate, cyclic carboxylate, or the like is used. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). A kind of nonaqueous solvent may be used singly, or two or more kinds thereof may be used in combination.

As the lithium salt, a lithium salt of, for example, chlorine-containing acid (such as LiClO₄, LiAlCl₄, LiB₁₀Cl₁₀), a lithium salt of fluorine-containing acid (such as LiPF₆, LiBF₄, LiSbF₆, LiAsF₆, LiCF₃SO₃, LiCF₃CO₂), a lithium salt of fluorine-containing acid imide (such as LiN(CF₃SO₂)₂, LiN(CF₃SO₂)(C₄F₉SO₂), LiN(C₂F₅SO₂)₂, or the like), a lithium halide (LiCl, LiBr, LiI, or the like), or the like can be used. A kind of lithium salt may be used singly, or two or more kinds thereof may be used in combination.

### [Separator]

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric. As a material of the separator, for example, a polyolefin such as polypropylene or polyethylene may be used.

The structure of the secondary battery can be, for example, a structure in which an electrode group formed by winding a positive electrode and a negative electrode with a separator interposed therebetween and an electrolyte are accommodated in an outer case. Alternatively, other forms of electrode group may be applied, such as a laminated electrode group formed by laminating the positive electrode and the negative electrode with a separator interposed therebetween, instead of the wound electrode group. The secondary batteries may be of any form, for example, a cylindrical type, prismatic type, coin type, button type, laminated type, etc.

FIG. 2 is a schematic perspective partially cutaway view of a prismatic secondary battery according to an embodiment of the present disclosure.

The battery includes a bottomed prismatic battery case 4, an electrode group 1 and an electrolyte contained within the battery case 4, and a sealing plate 5 which seals the opening of the battery case 4. The electrode group 1 has a negative electrode in the form of a long strip, a positive electrode in the form of a long strip, and a separator interposed therebetween. The electrode group 1 is formed by winding the negative electrode, the positive electrode, and the separator around a flat core and removing the core. The sealing plate 5 has an injection port plugged with a sealing plug 8 and a negative electrode terminal 6 insulated from the sealing plate 5 with a gasket 7.

One end of the negative electrode lead 3 is attached to the negative electrode current collector of the negative electrode by welding, etc. One end of the positive electrode lead 2 is attached to the positive electrode current collector of the positive electrode by welding, etc. The other end of the negative electrode lead 3 is electrically connected to the negative electrode terminal 6. The other end of the positive electrode lead 2 is electrically connected to the sealing plate 5. At the upper part of the electrode group 1, a resin made frame is arranged to isolate the electrode group 1 from the sealing plate 5 and to isolate the negative electrode lead 3 from the battery case 4.

### <Examples>

In the following, the present disclosure will be described in detail based on Examples and Comparative Examples, but the present invention is not limited to Examples below.

### <Example 1>

### [Preparation of LSX Particles]

Lithium carbonate and silicon dioxide were mixed at a molar ratio of Li₂CO₃: SiO₂ = 34:66; the mixture was dissolved at 1500°C in an inert gas atmosphere for 5 hours; the melt was flaked through metal rollers; and a heat treatment at 750°C for 5 hours gave a lithium silicate composite oxide present as a mixed phase of noncrystalline and crystalline phases. The obtained lithium silicate composite oxide was ground so as to have an average particle size of 10 µm.

A lithium silicate composite oxide with an average particle size of 10 µm and silicon germanium particles (average particle size 10 µm) were mixed at a mass ratio of 70:30. For the silicon germanium particles, the silicon germanium particles with a germanium content of 2 atom% relative to the entire particles was used. The silicon germanium was produced by subjecting a mixture of silicon and germanium to an arc discharge in an inert gas atmosphere and melting the mixture with the heat. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid was closed, and the mixture was subjected to composite formation at 200 rpm for 25 hours in an inert atmosphere.

Thereafter, the ground product was press-molded into a sheet having a thickness of 4 to 5 mm at room temperature to obtain a molded sheet. The molded product was rolled through rolls under heat at 800°C to obtain a sintered product. The rolling was carried out so that a pressure of 240 MPa was applied to the molded product.

Thereafter, the sintered product was ground and passed through a 40 µm mesh, and then mixed with coal pitch (MCP250, JFE Chemical Corporation), and the mixture was baked at 800° C for 5 hours in an inert gas atmosphere to cover the surfaces of the LSX particles with conductive carbon to form a conductive layer. The coating amount of the conductive layer was 5 mass% relative to the total mass of the LSX particles and the conductive layer. Afterwards, a sieve was used to obtain LSX particles with an average particle size of 5 µm with a conductive layer.

An XRD-analysis was carried out, each for the ground product after forming the composite but before sintering, the sintered product, and the LSX particles after forming the conductive layer, to determine the half-width of a peak derived from the Si (111) plane. From the half-width of the peak, the crystallite sizes were determined by Scherrer's equation. The porosity of the sintered product was determined by SEM-observation of the cross sections.

### [Negative Electrode Production]

The LSX particles and graphite were mixed at a mass ratio of 5:95 and used as a negative electrode active material. The negative electrode active material, sodium carboxy methylcellulose (CMC-Na), styrene-butadiene rubber (SBR), and polyacrylic acid lithium salt were mixed at a mass ratio of 96.5:1:1.5:1, water was added, and then stirred using a mixer (T.K. HIVIS MIX, manufactured by PRIMIX Corporation) to prepare a negative electrode slurry. Next, the negative electrode slurry was applied to the surface of a copper foil so that the mass of the negative electrode mixture per 1 m² was 190 g, and the coating film was dried and then rolled to prepare a negative electrode having a negative electrode mixture layer having a density of 1.5 g/cm³ formed on both surfaces of the copper foil.

### [Positive Electrode Production]

Lithium cobaltate, acetylene black, and polyvinylidene fluoride were mixed at a mass ratio of 95:2.5:2.5, and stirred using a mixer (T.K. HIVIS MIX, manufactured by PRIMIX Corporation) after adding N-methyl-2-pyrrolidone (NMP) to prepare a positive electrode slurry. Next, the positive electrode slurry was applied to the surface of an aluminum foil, and the coating film was dried, and then rolled to prepare a positive electrode having a positive electrode mixture layer with a density of 3.6 g/cm³ formed on both surfaces of the aluminum foil.

### [Preparation of Electrolyte]

A nonaqueous electrolyte was prepared by dissolving LiPF₆ in a mixed solvent containing ethylene carbonate (EC) and diethyl carbonate (DEC) with a volume ratio of 3:7 at a concentration of 1.0 mol/L.

### [Secondary Battery Production]

A tab was attached to the electrodes, and an electrode group was produced by winding the positive electrode and the negative electrode spirally with a separator interposed so that the tabs were positioned at the outermost peripheral portion. The electrode group was inserted into an exterior body made of an aluminum laminate film, dried in vacuo at 105°C for 2 hours, and then the nonaqueous electrolyte was injected. The opening of the exterior body was sealed to obtain a secondary battery A1.

### <Comparative Example 1>

In Example 1, lithium silicate composite oxide and silicon particles (3N, average particle size 10 µm) were mixed at a mass ratio of 70:30. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid was closed, and the mixture was subjected to grinding at 200 rpm for 25 hours in an inert atmosphere. The mill was sintered in the same manner as in Example 1 to give a sintered product of the mixture.

Thereafter, the sintered product was ground and passed through a 40 µm mesh, and then mixed with coal pitch (MCP250, JFE Chemical Corporation), and the mixture was baked at 800°C for 5 hours in an inert gas atmosphere to cover the surfaces of the LSX particles with conductive carbon to form a conductive layer. The coating amount of the conductive layer was 5 mass% relative to the total mass of the LSX particles and the conductive layer. Afterwards, a sieve was used to obtain LSX particles with an average particle size of 5 µm with a conductive layer.

Using the LSX particles described above, a negative electrode was prepared in the same manner as in Example 1 to obtain a secondary battery B1.

The batteries of Examples and Comparative Examples were evaluated as described below.

### [Charge and Discharge Cycle Test]

For each battery, charge/discharge was repeated under the following conditions.

### <Charge>

The batteries obtained above were subjected to constant current charging until the voltage reached 4.2 V at a current of 1 It (800 mA), and thereafter, subjected to constant voltage charging at a voltage of 4.2 V until the current reached 1/20 It (40 mA), in an environment of 25°C.

### <Discharge>

Constant current discharge was performed at 25°C at a current of 1 It (800 mA) until the voltage reached 2.75 V.

The pause period between charging and discharging was 10 minutes. The ratio of the discharge capacity of the 500th cycle to the discharge capacity of the 1st cycle was defined as cycle retention rate.

For the batteries A1 and B1, the half-width (full width at half maximum) of the XRD peaks derived from the Si (111) plane, and the crystallite size of the silicon particles calculated from the half-width for the LSX particles used for the negative electrode active material are shown in Table 1. The half-width and the crystallite size are shown, each for the ground product after forming the composite, the sintered product, and LSX particles after forming the conductive layer. In addition, the porosity of the sintered product was measured. Table 1 shows the results.

Table 1 shows that the half-width of the XRD peak increases and the crystallite size of the silicon particles increases, after forming the composite, as the sintering and the conductive layer formation are performed. This is considered to be because the respective treatments involve heat treatment, allowing crystal-growth of silicon. However, Table 1 shows that when the silicon particles containing germanium are used, an increase in the half-width of the XRD peak is suppressed and an increase in the crystallite size is suppressed, as compared with the case where the silicon particles containing no germanium are used. The porosity of the LSX particles is also lowered.

**[Table 1]**

| Battery | | Half-width (2θ/deg.) | Crystallite size (nm) | Porosity (%) |
|---|---|---|---|---|
| A1 | After forming composite | 0.98 | 8.4 | 0.4 |
| | After sintering | 0.91 | 9.1 | |
| | After forming conductive layer | 0.85 | 9.7 | |
| B1 | After forming composite | 0.95 | 8.6 | 1.9 |
| | After sintering | 0.83 | 9.9 | |
| | After forming conductive layer | 0.81 | 10.1 | |

### [Industrial Applicability]

The present disclosure can provide a secondary battery having a high capacity and good charge/discharge cycle characteristics. The secondary battery according to the present disclosure is useful for a main power source of a mobile communication device, a portable electronic device, or the like.

### [Reference Signs List]

- 1: Electrode Group
- 2: Positive Electrode Lead
- 3: Negative Electrode Lead
- 4: Battery Case
- 5: Sealing Plate
- 6: Negative Electrode Terminal
- 7: Gasket
- 8: Sealing Plug
- 20: LSX particles
- 21: Lithium Silicate Phase
- 22: Silicon Particles
- 23: Mother particles
- 26: Conductive Layer

## Claims

1. A negative electrode active material (20) for a secondary battery comprising silicate composite particles (23) including silicon particles (22) and a silicate phase (21), wherein
the silicon particles (22) are dispersed in the silicate phase (21), and
the silicon particles (22) contain a first element of at least one selected from the group consisting of germanium and aluminum;
wherein:
- the first element includes germanium and the silicon particles (22) contain 0.1 atom% or more and 20 atom% or less of the first element; or
- the first element includes aluminum.

2. The negative electrode active material (20) for a secondary battery of claim 1, wherein the first element includes aluminum and the silicon particles (22) contain 0.1 atom% or more and 20 atom% or less of the first element.

3. The negative electrode active material (20) for a secondary battery of claim 1 or 2, wherein at least a part of atoms of the first element is dissolved in the silicon particles (22) and forms a solid solution.

4. The negative electrode active material (20) for a secondary battery of any one of claims 1 to 3, wherein an average particle size of the silicon particles (22) is 1 nm or more and 1000 nm or less as measured according to the description.

5. The negative electrode active material (20) for a secondary battery of any one of claims 1 to 4, wherein the silicate phase (21) contains Li, and at least one element selected from the group consisting of alkali metal elements other than Li, and Group II elements.

6. The negative electrode active material (20) for a secondary battery of any one of claims 1 to 5, wherein the silicate phase (21) further contains an element M, and
the element M is at least one selected from the group consisting of B, Al, Zr, Nb, Ta, La, V, Y, Ti, P, Bi, Zn, Sn, Pb, Sb, Co, Er, F, and W.

7. A secondary battery comprising a positive electrode, a negative electrode, an electrolyte, and a separator interposed between the positive electrode and the negative electrode, wherein
the negative electrode includes a current collector and a negative electrode active material layer, and
the negative electrode active material layer includes the negative electrode active material (20) for a secondary battery of any one of claims 1 to 6.

## Patentansprüche

1. Negatives Elektrodenaktivmaterial (20) für eine Sekundärbatterie, umfassend Silicat-Kompositpartikel (23), die Siliciumpartikel (22) und eine Silicatphase (21) umfassen, wobei
die Siliciumpartikel (22) in der Silicatphase (21) dispergiert sind, und
die Siliciumpartikel (22) ein erstes Element enthalten, das mindestens eines ist, ausgewählt aus der Gruppe bestehend aus Germanium und Aluminium;
wobei:
- das erste Element Germanium umfasst und die Siliciumpartikel (22) 0,1 Atom-% oder mehr und 20 Atom-% oder weniger des ersten Elements enthalten; oder
- das erste Element Aluminium umfasst.

2. Negatives Elektrodenaktivmaterial (20) für eine Sekundärbatterie nach Anspruch 1, wobei das erste Element Aluminium umfasst und die Siliciumpartikel (22) 0,1 Atom-% oder mehr und 20 Atom-% oder weniger des ersten Elements enthalten.

3. Negatives Elektrodenaktivmaterial (20) für eine Sekundärbatterie nach Anspruch 1 oder 2, wobei mindestens ein Teil der Atome des ersten Elements in den Siliciumpartikeln (22) gelöst ist und eine feste Lösung bildet.

4. Negatives Elektrodenaktivmaterial (20) für eine Sekundärbatterie nach einem der Ansprüche 1 bis 3, wobei eine mittlere Partikelgröße der Siliciumpartikel (22) 1 nm oder mehr und 1000 nm oder weniger beträgt, gemessen gemäß der Beschreibung.

5. Negatives Elektrodenaktivmaterial (20) für eine Sekundärbatterie nach einem der Ansprüche 1 bis 4, wobei die Silicatphase (21) Li enthält, und mindestens ein Element, ausgewählt aus der Gruppe bestehend aus Alkalimetallelementen außer Li, und Elementen der Gruppe II.

6. Negatives Elektrodenaktivmaterial (20) für eine Sekundärbatterie nach einem der Ansprüche 1 bis 5, wobei die Silicatphase (21) ferner ein Element M enthält, und
das Element M mindestens eines ist, ausgewählt aus der Gruppe bestehend aus B, Al, Zr, Nb, Ta, La, V, Y, Ti, P, Bi, Zn, Sn, Pb, Sb, Co, Er, F, und W.

7. Sekundärbatterie, umfassend eine positive Elektrode, eine negative Elektrode, einen Elektrolyten, und einen Separator, der zwischen der positiven Elektrode und der negativen Elektrode angeordnet ist, wobei
die negative Elektrode einen Stromkollektor und eine negative Elektrodenaktivmaterialschicht umfasst, und
die negative Elektrodenaktivmaterialschicht das negative Elektrodenaktivmaterial (20) für eine Sekundärbatterie nach einem der Ansprüche 1 bis 6 umfasst.

## Revendications

1. Matériau actif d'électrode négative (20) pour une batterie secondaire, comprenant des particules composites de silicate (23) comprenant des particules de silicium (22) et une phase de silicate (21), dans lequel
les particules de silicium (22) sont dispersées dans la phase de silicate (21), et
les particules de silicium (22) contiennent un premier élément qui est au moins un élément choisi dans le groupe constitué du germanium et de l'aluminium ;
dans lequel :
- le premier élément comprend du germanium et les particules de silicium (22) contiennent 0,1 % atomique ou plus et 20 % atomique ou moins du premier élément ; ou
- le premier élément comprend de l'aluminium.

2. Matériau actif d'électrode négative (20) pour une batterie secondaire selon la revendication 1, dans lequel le premier élément comprend de l'aluminium et les particules de silicium (22) contiennent 0,1 % atomique ou plus et 20 % atomique ou moins du premier élément.

3. Matériau actif d'électrode négative (20) pour une batterie secondaire selon la revendication 1 ou 2, dans lequel au moins une partie des atomes du premier élément est dissoute dans les particules de silicium (22) et forme une solution solide.

4. Matériau actif d'électrode négative (20) pour une batterie secondaire selon l'une quelconque des revendications 1 à 3, dans lequel une taille moyenne des particules de silicium (22) est de 1 nm ou plus et de 1000 nm ou moins, telle que mesurée selon la description.

5. Matériau actif d'électrode négative (20) pour une batterie secondaire selon l'une quelconque des revendications 1 à 4, dans lequel la phase de silicate (21) contient du Li, et au moins un élément choisi dans le groupe constitué des éléments de métaux alcalins autres que le Li, et des éléments du Groupe II.

6. Matériau actif d'électrode négative (20) pour une batterie secondaire selon l'une quelconque des revendications 1 à 5, dans lequel la phase de silicate (21) contient en outre un élément M, et
l'élément M est au moins un élément choisi dans le groupe constitué de B, Al, Zr, Nb, Ta, La, V, Y, Ti, P, Bi, Zn, Sn, Pb, Sb, Co, Er, F, et W.

7. Batterie secondaire comprenant une électrode positive, une électrode négative, un électrolyte, et un séparateur interposé entre l'électrode positive et l'électrode négative, dans laquelle
l'électrode négative comprend un collecteur de courant et une couche de matériau actif d'électrode négative, et
la couche de matériau actif d'électrode négative comprend le matériau actif d'électrode négative (20) pour une batterie secondaire selon l'une quelconque des revendications 1 à 6.
